Europäisches Patentamt

European Patent Office

Office européen des brevets

(19)

(11) Numéro de publication: **0 173 617**
**B1**

(12) **FASCICULE DE BREVET EUROPÉEN**

(45) Date de publication du fascicule du brevet:
02.08.89

(51) Int. Cl.⁴: **G 01 S 17/42,** G 02 F 1/33,
G 01 S 7/48

(21) Numéro de dépôt: **85401589.8**

(22) Date de dépôt: **02.08.85**

(54) Système émetteur-récepteur pour imagerie laser.

(30) Priorité: **03.08.84 FR 8412333**

(43) Date de publication de la demande:
**05.03.86 Bulletin 86/10**

(45) Mention de la délivrance du brevet:
**02.08.89 Bulletin 89/31**

(84) Etats contractants désignés:
**DE GB SE**

(56) Documents cité:
**US-A-4 311 384**
**US-A-4 311 385**
**US-A-4 326 799**
**US-A-4 443 066**

**PHOTONICS - édité par M. BALKANSKI et al., 1973,**
**Gauthier Villars, Paris (FR), pages 99-105**

(73) Titulaire: **THOMSON- CSF, 51, Esplanade du**
**Général de Gaulle, F-92800 Puteaux (FR)**

(72) Inventeur: **Meyzonnette, Jean- Louis, THOMSON-**
**CSF SCPI 173, bld Haussmann, F-75379 Paris**
**Cedex 08 (FR)**
Inventeur: **Remy, Bertrand, THOMSON- CSF SCPI**
**173, bld Haussmann, F-75379 Paris Cedex 08 (FR)**

(74) Mandataire: **Benoit, Monique, THOMSON- CSF**
**SCPI, F-92045 PARIS LA DEFENSE CEDEX 67 (FR)**

EP 0 173 617 B1

## Description

La présente invention concerne un système émetteur-recepteur destiné, plus particulièrement, à faire de l'imagerie laser.

Compte tenu de la finesse et de la faible divergence du pinceau laser émis par l'illuminateur, la recherche et la localisation angulaire de cible sont avantageusement menées à bien par d'autres dispositifs détecteurs à champ d'observation plus large. La phase d'acquisition préalable peut ainsi être effectuée par un dispositif FLIR (Forward Looking Infra-Red), ou par un radar associé, le système laser étant utilisé ensuite pour l'identification de cible par observation de l'image détectée sur un organe de visualisation.

Le champ instantané de l'illuminateur est très restreint, de l'ordre de $10^{-4}$ à $10^{-3}$ radians généralement, ce qui correspond à définir un point de l'image. Pour produire l'image laser, le système est équipé d'un dispositif de balayage opto-mécanique qui déplace angulairement le faisceau et permet de couvrir le champ d'exploration désiré. Le signal vidéo détecté et traité peut être appliqué ensuite à un dispositif de visualisation pour reconstituer point par point l'image de la zone d'espace balayée par le faisceau laser.

La mise en oeuvre de ces systèmes d'imagerie fait apparaître un problème de détection lié aux paramètres vitesse angulaire de balayage et distance d'éloignement de la cible illuminée.

Le flux émis par l'illuminateur se propage à la vitesse de la lumière vers la cible; il en est de même du rayonnement laser rétrodiffusé vers le récepteur. Il est donc nécessaire, pour assurer une bonne détection, que la direction visée par le récepteur coïncide au moment où il reçoit le flux en retour, le plus possible avec la direction initiale d'émission. Ceci est vérifié intégralement en l'absence de balayage, mais on conçoit bien que plus le balayage est rapide et la cible éloignée et plus on risque de ne plus recevoir le rayonnement réfléchi par la cible sur la surface sensible du photo-détecteur, étant donné que le champ de réception est généralement adapté et du même ordre de grandeur que celui de l'émetteur. Ceci impose donc des limitations à prévoir pour ces paramètres et consécutivement pour la cadence d'image, en sorte que le décalage angulaire entre la direction de l'axe optique de réception et celle initiale de l'axe optique d'émission, produit pendant la durée aller et retour du flux lumineux, reste compatible avec un fonctionnement satisfaisant du récepteur.

Le but de l'invention est de remédier à ces inconvénients en dotant le système, comme revendiqué, de moyens de déviation optique permettant de produire un décalage angulaire relatif entre les directions de visée d'émission et de réception en sorte de compenser la rotation correspondante de balayage qui intervient pendant le trajet aller et retour du flux lumineux émis vers la cible. Ce but est atteint par un système selon la revendication 1.

Les particularités et avantages de l'invention apparaîtront dans la description qui suit, donnée à titre d'exemple à l'aide des figures annexées qui représentent:

- Figs. 1 à 4, des schémas relatifs au problème à résoudre et à la solution utilisée;
- Fig. 5, un diagramme général d'un système émetteur-récepteur à imagerie laser conforme à l'invention;
- Fig. 6, un exemple de réalisation des moyens de déviation optique;
- Fig. 7, un exemple de réalisation des moyens de commande de déviation optique.

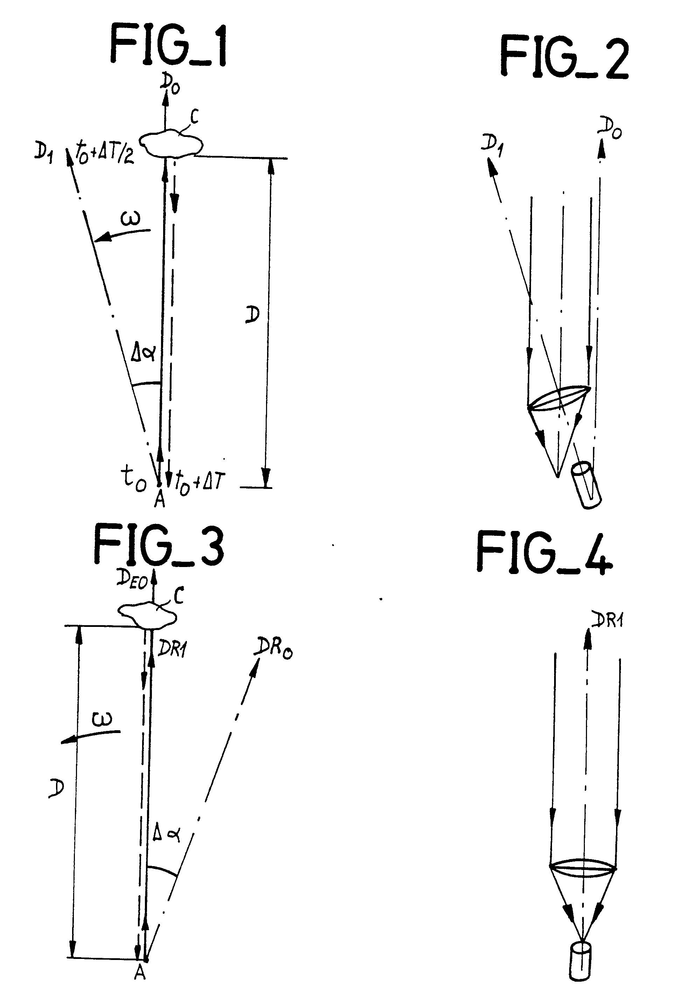

La figure 1 représente le trajet aller et retour du rayonnement laser émis à partir d'un point A et renvoyé selon la même direction par la cible C illuminée. Compte tenu de la valeur élevée de la vitesse de la lumière, on peut considérer que durant l'intervalle de temps $\Delta T$ séparant l'émission de la réception, le système émetteur-récepteur reste localisé en A. A titre d'exemple pour une cible située à une distance D égale à 3 kms, l'intervalle $\Delta T$ vaut 20 microsecondes et même en considérant le système aéroporté, le déplacement du point A reste négligeable. Par contre, la rotation $\Delta\theta$ intervenant durant $\Delta T$ est à prendre en considération car cette rotation des axes émetteur et récepteur qui sont normalement parallèles, doit rester limitée pour éviter que le flux reçu de la cible C ne soit focalisé en dehors de la surface photoréceptrice du détecteur comme le montre la figure 2. $D_o$ représente la direction initiale de visée du système à l'instant $t_o$ initial d'émission et $D_1$ la direction à l'instant $t_1 = t_o + \Delta T$. A titre d'exemple, pour produire une image à un standard de télévision comptant approximativement 600 points par ligne et avec une durée de ligne de 64 microsecondes, on se rend compte des fortes limitations imposées au système du point de vue distance maximale pouvant être prise en compte pour une vitesse maximale de balayage donnée, ou inversement, vitesse maximale de balayage pour une distance maximale donnée.

Ces limitations ne s'imposent plus si l'on reproduit, conformément à l'invention, les conditions optimales de détection qui sont celles présentées à balayage nul c'est-à-dire avec la direction de pointage fixe. La solution est indiquée sur les figures 3 et 4, les directions initiales sont $DE_o$ pour l'émetteur, $DR_o$ pour le récepteur. Le décalage angulaire $\Delta\alpha$ est choisi avec le signe approprié pour correspondre au sens de rotation du balayage, en sorte qu'après l'intervalle $\Delta T$ la direction $DR_o$ de l'axe de réception vient en DR1 selon la direction initiale d'émission $DE_o$. Ainsi le rayonnement renvoyé par la cible C à la distance D est reçu parallèlement à l'axe DR1 à l'instant $t_1$. La valeur du décalage angulaire $\Delta\alpha$ est fonction de la vitesse angulaire $\omega$ du balayage et de $\Delta T$ et donc de la distance D de cible. Ce paramètre s'écrit $\omega.2D/C$ ou $\underline{c}$ est la vitesse de la lumière. Pour une distance D variant dans une plage

limitée, le décalage $\Delta\alpha$ peut être choisi constant; plus généralement, il sera nécessaire de compenser sa valeur en fonction des variations de distance par rapport à la cible.

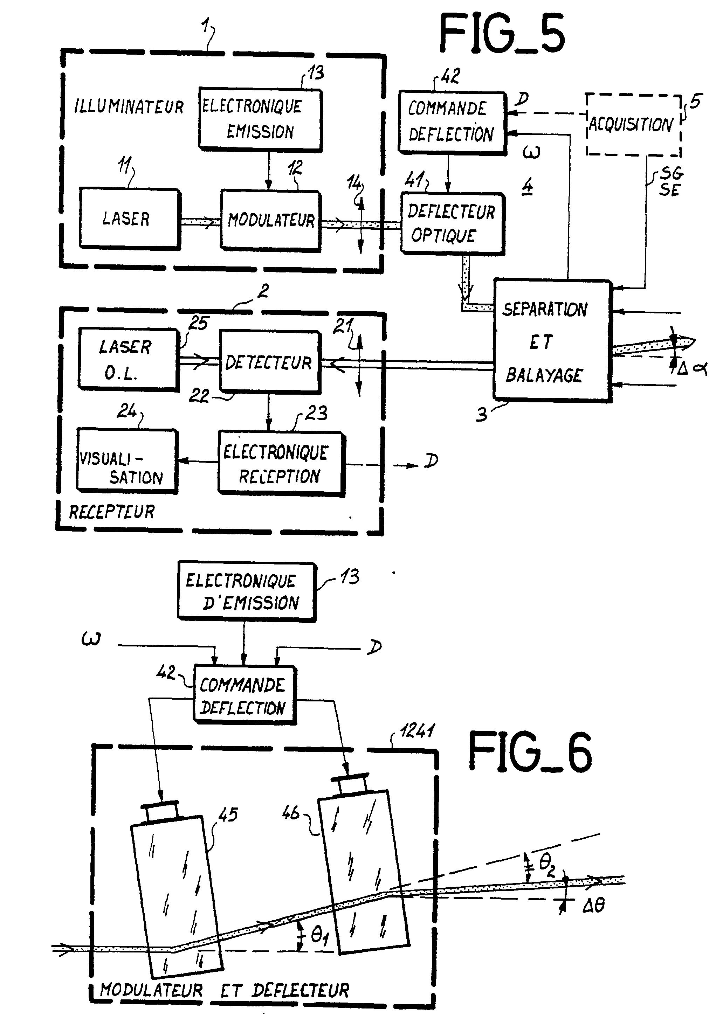

La figure 5 représente un diagramme général où l'on distingue l'émetteur de lumière dit illuminateur 1 qui produit le faisceau laser dont l'axe représente la direction de visée du système, et un récepteur 2 dont l'axe optique de réception est orienté de même. Un dispositif 3 produit la séparation optique des faisceaux d'émission et de réception et le balayage linéaire ou bidimensionnel désiré pour couvrir le champ à explorer.

Conformément à l'invention le système est équipé de moyens de déviation optique 4 pour décaler relativement les axes d'émission et de réception. Ces moyens peuvent être décomposés en un dispositif déflecteur optique 41 et un circuit de commande de déflection 42. Le déflecteur 41 peut être constitué par tout système de déviation optique angulaire rapide, de type opto-mécanique, opto-électronique, opto-acoustique, etc...; il est interposé, sur l'une des voies d'émission ou de réception, par exemple sur celle d'émission comme représenté. Le déflecteur 41 devra être placé en amont du dispositif de balayage 3 dans le sens émission ou en aval du dispositif 3 dans le sens réception, de façon à influer sur la voie correspondante. Le circuit 42 produit les signaux de commande du déflecteur 41 en fonction des paramètres distance D et vitesse de balayage $\omega$. Le paramètre D est mesuré localement ou donné par un équipement annexe 5, un radar par exemple. La vitesse angulaire $\omega$ rest mesurée par un capteur en 3.

Les ensembles émetteur 1 et récepteur 2 sont généralement constitués des éléments principaux figurés. Ces moyens consistent pour l'illuminateur en: un laser 11 qui délivre une onde continue ou pulsée; un modulateur 12 qui effectue la modulation désirée, par exemple une modulation temporelle pour découper le faisceau continu en impulsions lumineuses et/ou une modulation de fréquence, sur réception de signaux de commande correspondants; des circuits électroniques 13 pour élaborer les signaux de commande de la modulation; un objectif 14 de sortie pour obtenir le diamètre et la divergence désirés du faisceau démission. Côté réception, les moyens principaux consistent en: une optique d'entrée 21 pour focaliser le rayonnement laser renvoyé par rétroréflection sur la cible; un détecteur 22 pour détecter le rayonnement focalisé; des circuits électroniques de traitement 23 pour produire notamment les signaux vidéo de restitution d'image; un dispositif de visualisation 24 ou de stockage d'image. L'ensemble 21 à 24 correspond à une réception non cohérente, dans le cas d'une détection cohérente le détecteur reçoit en outre une onde locale d'un oscillateur 25 asservi à la fréquence d'émission, ou bien l'onde locale est obtenue par prélèvement d'une fraction du faisceau d'émission.

Les structures 1, 2 précitées sont présentes dans la plupart des télémètres laser, à l'exception de la visualisation d'image 24; les circuits 23 y effectuent des mesures de distance D et éventuellement de dérive Doppler. Un système de ce genre est décrit en particulier dans le brevet français 2 519 771 relatif à un lidar à compression d'impulsions et/où l'ensemble de modulation 12, 13 est agencé pour produire périodiquement deux impulsions modulées linéairement en fréquence, selon la technique dite "CHIRP" en anglosaxon. Pour émettre ces impulsions périodiquement, le modulateur 12 est avantageusement constitué à l'aide de deux déflecteurs acousto-optiques montés tête-bêche.

Ce montage est rappelé sur la figure 6 et il peut être utilisé, selon l'invention, pour produire en outre, la déflection désirée entre les axes d'émission et de réception. Le bloc modulateur et déflecteur 1241 comporte les deux déflecteurs 45 et 46. Le milieu de propagation de ces déflecteurs acousto-optiques est constitué par exemple avec un cristal de Germanium lorsqu'on travaille avec des longueurs d'ondes laser de 10,6 microns; des transducteurs électro-acoustiques, tels des quartz reçoivent les signaux électriques de commande et les transforment par effet piézo-électrique en vibrations acoustiques qui se propagent dans le milieu en Germanium. Ces ondes modifient localement l'indice de réfraction. Chaque modulateur 45, 46 se comporte comme un réseau de phase de pas variable capable de défléchir le flux lumineux incident par diffraction. Afin d'optimiser le rendement, ces dispositifs sont généralement utilisés dans le premier ordre de diffraction avec un faisceau lumineux quasi-collimaté arrivant sous l'angle dit de "BRAGG". Dans ces conditions, la déflection est donnée au premier ordre par l'expression: $\theta = \lambda f/V$ ($\lambda$ longueur d'onde du flux lumineux, f fréquence de l'onde acoustique, V vitesse du son dans le milieu d'interaction). Le faisceau incident subit une translation de fréquence égale à f qui permet sa modulation et il subit en outre un changement de direction. En utilisant, selon la technique connue, une modulation "CHIRP" et un montage tête-bêche de deux modulateurs acoustiques 45 et 46, les translations de fréquence sont égales et s'ajoutent tandis que les déflections de même valeur se retranchent, en sorte que la déviation résultante est nulle. Pour introduire la déviation désirée en sortie, les moyens de commande 42 sont interposés sur la liaison entre l'électronique d'émission 13 et le modulateur-déflecteur 1241. Il en résulte des déviations $\theta_1$ et $\theta_2$ cette fois différentes et une déviation résultante $\Delta\theta$ correspondant à la valeur $\Delta\alpha$ désirée, au coefficient de grossissement près G de l'optique 14 selon la relation $\Delta\theta = G.\Delta\alpha$, étant donné que l'optique 14 d'émission est disposée en aval du dispositif déviateur 1241.

Le fonctionnement est le suivant. A un instant t donné le modulateur acousto-optique 45 reçoit un signal de fréquence instantanée $f_1(t)$, par exemple de l'ordre de 50 à 100 MHz, et le modulateur 46 reçoit un signal de fréquence instantanée $f_2(t)$ peu différente de $f_1$. La déviation

$\theta_1$ introduite par le premier élément 45 vaut $\lambda.f_1(t)/V$ et celle $\theta_2$ due au deuxième élément 46 vaut $\lambda f_2(t)/V$. Pour des valeurs = 10,6 microns, V = 5500 m/seconde dans le cas où le milieu de propagation est du Germanium (ce paramètre reste sensiblement constant), les déviations optiques introduites sont de quelques dizaines de milliradians. En sortie la déviation instantanée résultante est alors égale à $\Delta\theta = \theta1 - \theta2$ et est donc fonction de la différence de $f_1(t) - f_2(t)$; la modulation de fréquence est donnée par $f(t) = f_1(t) + f_2(t)$.

L'ensemble 13 - 42 est destiné à produire les commandes donnant les valeurs $\Delta\theta$ et $f(t)$ nécessaires. La valeur de correction angulaire $\Delta\theta$ étant fonction de la vitesse instantanée $\omega$ du balayage angulaire et de la distance D de la cible. Dans la pratique les valeurs $f_1(t)$ et $f_2(t)$ sont peu différentes, quelques centaines de KHz à quelques MHz par exemple. Le temps de réponse très court des modulateurs 45, 46, quelques microsecondes, permet d'effectuer des déviations angulaires du faisceau quasiment en temps réel. La modulation de fréquence $f(t)$ peut être un signal "CHIRP" ou autre, on peut aussi considérer la fréquence constante. La différence de fréquence $f_1(t) - f_2(t)$ à produire se calcule en fonction de $\omega$ et D, les autres coefficients c, V, $\lambda$ étant constants. La correction $\Delta\theta$ résultante permet d'illuminer le point cible qui est vu par le détecteur à l'instant 2 D/c suivant l'émission, cette correction est facilitée par le fait que le balayage est le même pour l'émission et la réception. La différence $f_1(t) - f_2(t)$ est égale à $G.(2\omega D/c).V/\lambda$ qui peut s'écrire $K \omega D$, K étant une constante. Cette valeur peut être calculée par un circuit logique ou par un calculateur annexe prévu dans l'équipement. Il est à noter que dans le cas d'un balayage ligne par ligne conventionnel la valeur $\omega$ à prendre en compte est celle du balayage ligne, l'autre mouvement étant beaucoup plus lent et la correction correspondante négligeable.

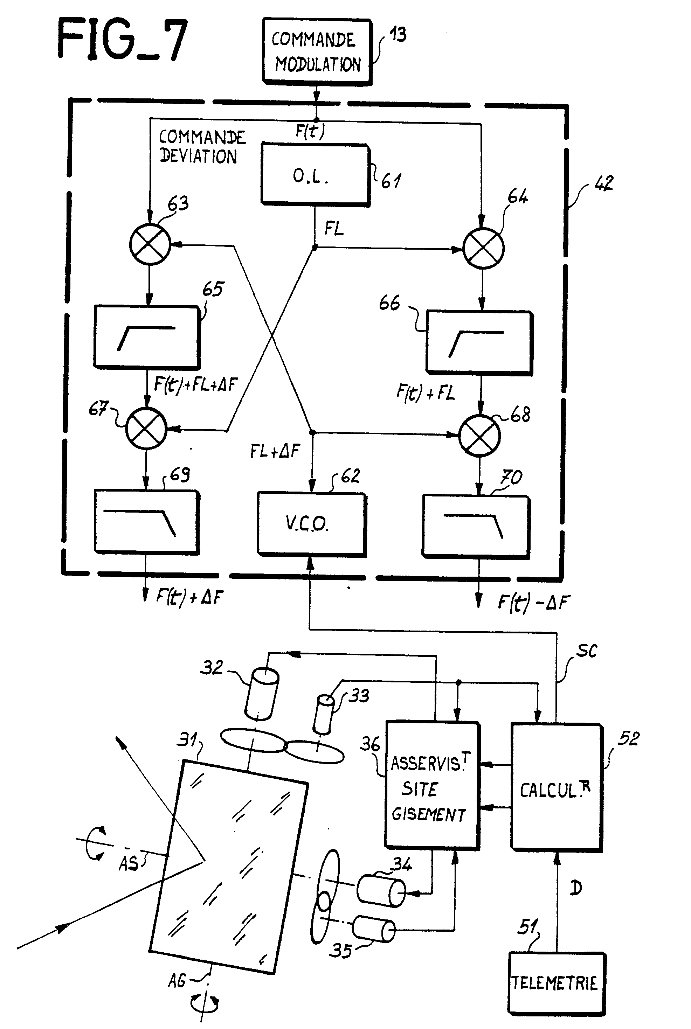

La figure 7 représente un agencement possible des circuits de balayage et de déflexion. On a considéré un balayage ligne par ligne selon deux axes perpendiculaires, les moyens étant symbolisés par un miroir 31 pouvant tourner autour d'un premier axe AG en gisement et autour d'un deuxième axe AS en site. L'entraînement est produit par les moteurs 32 et 34 alimentés par un circuit d'asservissement de position 36 à partir des positions angulaires instantanées données par les capteurs 33 et 35 et à partir de signaux de commande de balayage ligne par ligne produits par un calculateur 52 annexe. Le calculateur reçoit en outre le paramètre D et la vitesse angulaire peut être déduite du signal capté par le dispositif 33; et à partir de ces données, il élabore un signal de correction SC. Le circuit 42 comporte deux oscillateurs, un premier oscillateur 61 qui délivre une fréquence locale fixe $F_L$, par exemple de quelques dizaines de MHz, et un deuxième oscillateur 62 qui délivre une fréquence ajustable de la forme $F_L + \Delta F$ ou $\Delta F$ est l'élément variable. L'oscillateur local 62 est contrôlé par le signal SC qui fait varier $\Delta F$ en fonction de $\omega$ et D. En appelant $F(t)$ la fréquence instantanée du signal reçu du circuit 13, ce signal $F(t)$ est appliqué à deux mélangeurs 63 et 64 pour le faire battre respectivement avec les signaux locaux de fréquence $F_L$ et $F_L + \Delta F$. A la sortie des filtres passe-haut 65 et 66 placés en aval on recueille respectivement les fréquences $F(t) + F_L + \Delta F$ et $F(t) + F_L$. Ces signaux sont mélangés à nouveau dans deux autres mélangeurs 67, 68 respectivement avec les fréquences $F_L$ et $F_L + \Delta F$ puis filtrés ensuite par les filtres passe-bas 69 et 70 pour recueillir un signal $F(t) + \Delta F$ destiné au modulateur 45 et un signal $F(t) - \Delta F$ pour le modulateur 46. Il en resulte une déviation angulaire $\Delta\theta$ du faisceau laser proportionnelle à $2\Delta F$ et une modulation de fréquence égale à $2F(t)$, ($F(t)$ peut être choisi égal à la moitié de la valeur de modulation $f(t)$ désignée précédemment). L'oscillateur local 62 peut être du type contrôlé par tension appelé V.C.O. (abréviation de Voltage Control Oscillator) et pour une réponse linéaire la variation $2\Delta F$ est proportionnelle au signal SC représentant le produit $K \omega D$. La valeur $f(t)$ ou 2 $F(t)$ peut être de l'ordre de 100 à 200 MHz, rester constante, ou varier dans le temps selon une loi linéaire ou autre. Le faisceau lumineux constitue la porteuse de fréquence $3.10^{13}Hz$ à 10 microns de longueur d'onde par exemple. La modulation de fréquence obtenue $f(t) = 2F(t)$ est indépendante de la correction $\Delta\theta$ introduite par le circuit 13, ce qui présente un grand intérêt dans les solutions à détection cohérente. On n'a pas représenté sur la figure 7 les moyens optiques de séparation de voies que l'on considère réalisés selon diverses techniques connues; le balayage peut être obtenu avec deux miroirs uniaxe, l'un tournant en site, l'autre en gisement, ou toute autre solution connue, à miroir polygonal par exemple. Le montage indiqué à deux mélangeurs sur chaque voie est justifié par la faible valeur de correction $\Delta F$ à produire, quelques centaines KHz suffisent, comparée à la plage de modulation $f(t)$ qui peut être de quelques dizaines de MHz. De plus, le montage assure la maîtrise du signe de la correction selon que la fréquence de l'oscillateur 62 est supérieure ou inférieure à la valeur $F_L$. Les dérives en température ou autres, des oscillateurs n'ont pas d'influence sur la modulation de fréquence ce qui est important pour les traitements à la réception autres que l'imagerie vidéo, l'extraction Doppler notamment. Ces dérives jouent par contre sur la correction angulaire $\Delta\theta$ mais leur influence reste négligeable.

Le paramètre distance D est fourni par un dispositif 51 indiqué sur la fig. 7 qui peut être un équipement annexe déjà signalé, un radar par exemple, ou bien faire partie du système où il constitue une partie des circuits électroniques de réception 23 (Fig. 5).

Avant de procéder au fonctionnement en imagerie laser il faut acquérir la cible et comme il a été indiqué dans le préambule un organe annexe 5 (Fig. 5) peut fournir les données initiales SG et SE du gisement et de l'élévation correspondant à la localisation en direction de la cible. Si la distance D n'est pas fournie par cette organe, on peut prévoir par exemple un pointage fixe dans la direction fournie et faire la mesure de la distance avant de procéder au balayage. Dans tous les cas les variations de distance restent assez lentes devant le temps de réponse de la chaîne de correction, temps qui est de l'ordre de quelques microsecondes.

La solution décrite à l'aide des figs. 6 et 7 présente l'avantage d'être très simple à mettre en oeuvre parce qu'elle utilise déjà des systèmes déflecteurs prévus sur l'équipement; seul reste à réaliser le circuit de commande 42 de la déflexion.

## Revendications

1. Système émetteur-récepteur laser pour imagerie vidéo, groupant un illuminateur laser (1) pour produire un faisceau lumineux suivant une direction de visée, un récepteur (2) avec un détecteur (22) pour détecter selon la direction de réception correspondante le rayonnement lumineux laser renvoyé par une cible illuminée, un dispositif de séparation de voies et de balayage (3), pour diriger vers le detecteur le rayonnement rétroréfléchi et déplacer en rotation angulaire ledit faisceau en sorte d'explorer un champ déterminé, des moyens de déviation optique (41, 42) pour produire un décalage angulaire relatif entre la direction de visée de l'illuminateur et celle du récepteur, de manière à compenser la rotation de balayage intervenant pendant la durée aller et retour du trajet lumineux entre le système et la cible illuminée, lesdits moyens de déviation optique comportant un dispositif déflecteur optique (41) commandé par un circuit (42) en fonction des variations des paramètres ω et D, ω étant la vitesse de balayage et D la distance d'éloignement de la cible, et un dispositif de visualisation de l'image vidéo détectée correspondant audit champ, le système étant caractérisé en ce que le dispositif déflecteur (41) est constitué d'un montage parallèle de deux déflecteurs acousto-optiques (45, 46), ledit circuit de commande (42) produisant deux signaux de fréquence différente de la forme F + ΔF et F - ΔF pour commander respectivement lesdits déflecteurs acousto-optiques, F étant une valeur constante et ΔF prédéterminée, en sorte de produire ledit décalage angulaire ayant la valeur de compensation (Δα) désirée, ainsi qu'une modulation mais de valeur 2F constante de la voie optique sur laquelle le dispositif déflecteur est interposé.

2. Système selon la revendication 1, caractérisé en ce que le dispositif déflecteur (41) est disposé en amont du dispositif de séparation et de balayage (3) dans le cas de la voie optique d'émission et en aval de ce dispositif dans le cas de la voie optique de réception.

3. Système selon la revendication 1 ou 2, caractérisé en ce que ledit montage de déflecteurs acousto-optiques (45, 46) est utilisé sur la voie optique d'émission pour constituer à la fois (12, 41) un modulateur de fréquence (12) et ledit dispositif déflecteur (41).

4. Système selon la revendication 2 et dans lequel l'illuminateur (1) comporte un générateur laser continu (11) et des moyens de modulation composés d'un modulateur (12) formé d'un montage parallèle de deux déflecteurs acousto-optiques (45, 46) et d'un circuit générateur (13) des signaux de commande des déflecteurs, caractérisé en ce que ledit modulateur constitue également (1241) ledit dispositif déflecteur optique, le circuit de commande (42) étant interposé sur la liaison avec ledit circuit générateur (13).

5. Système selon l'une quelconque des revendications 2 à 4, caractérisé en ce que ledit circuit de commande (42) produit un premier signal de fréquence (F(t) + ΔF) et un second signal de fréquence (F(t) - ΔF), la somme des fréquences 2F(t) étant la fréquence instantanée de modulation de la transmission et qui est indépendante de la valeur de décalage angulaire à produire, la différence des fréquences 2ΔF étant proportionnelle au décalage angulaire (Δα) à produire.

6. Système selon la revendication 5, caractérisé en ce que la différence des fréquences 2ΔF vérifie la relation:

$$2\Delta F = G.(V/\lambda).\Delta\alpha, \text{ avec } \Delta\alpha = 2w\,D/c,$$

où G représente le grossissement de l'optique de la voie d'émission, le dispositif déflecteur (41) étant place en amont de cette optique, la longueur d'onde du laser, V la vitesse de transmission du son dans le milieu acousto-optique, D la distance d'éloignement de la cible et c la vitesse de la lumière.

## Patentansprüche

1. Laser-sende-Empfangssystem für Videobilder, mit einer Laserstrahlenquelle (1), die einen Lichtstrahl in einer visierrichtung erzeugt, mit einem Empfänger (2), der einen Detektor (22) zur Erfassung der von einem bestrahlten ziel reflektierten Laserlichtstrahlung in der entsprechenden Empfangsrichtung aufweist, mit einer Pfadtrenn- und Abtastvorrichtung (3), die die reflektierte Strahlung auf den Detektor lenkt und den Strahl in Drehrichtung verschiebt, so daß ein gegebenes Feld überstrichen wird, mit optischen Ablenkmitteln (41, 42), die eine relative winkelversetzung zwischen der Visierrichtung der Strahlenquelle und der des Empfängers erzeugt, so daß die wahrend des Durchlaufs des Lichtstrahls zwischen dem System und dem beleuchteten Ziel und zurück erfolgende Drehung der Abtastung kompensiert wird, wobei diese optischen Ablenkmittel eine optische Ablenkvorrichtung (41) enthalten, die von einem Steuerkreis (42) abhängig von den Veränderungen der Parameter ω und D gesteuert wird, wobei ω die Abtastgeschwindigkeit und D der Zielabstand ist, und mit einer Anzeigevorrichtung für das erfaßte Videobild entsprechend diesem Abtastfeld, dadurch gekennzeichnet, daß die Ablenkvorrichtung (41) aus einer Parallelanordnung zweier akusto-optischer Deflektoren (45, 46) besteht, wobei der Steuerkreis (42) zwei signale unterschiedlicher Frequenz der Form F + ΔF und F - ΔF erzeugt, um je einen der akusto-optischen Deflektoren zu steuern, wobei F ein konstanter Wert und ΔF so vorbestimmt ist, daß die Winkelversetzung mit dem gewünschten Kompensationswert (Δα) sowie eine Modulation, aber mit konstantem Wert 2F, des optischen Pfads erzeugt wird, in den die Ablenkvorrichtung eingefügt ist.

2. System nach Anspruch 1, dadurch gekennzeichnet, daß die Ablenkvorrichtung (41) im Fall des optischen Sendepfads vor der Trenn- und Abtastvorrichtung (3) und im Fall des optischen Empfangspfads nach dieser Vorrichtung liegt.

3. System nach Anspruch 1 oder 2, dadurch gekennzeichnet, daß die Anordnung von akusto-optischen Deflektoren (45, 46) im optischen Sendepfad verwendet wird, um sowohl (12, 41) einen Frequenzmodulator (12) als auch eine Ablenkvorrichtung (41) zu bilden.

4. System nach Anspruch 2, in dem die Strahlenquelle (1) einen Dauerstrich-Lasergenerator (11) und Modulationsmittel enthält, die von einem Modulator (12) bestehend aus einer parallelen Anordnung zweier akusto-optischer Deflektoren (45, 46), und von einem Kreis (13) zur Erzeugung der Deflektor-Steuersignale gebildet werden, dadurch gekennzeichnet, daß der Modulator auch (1241) die optische Ablenkvorrichtung bildet, und daß der steuerkreis (42) in die verbindung mit dem Kreis (13) zur Erzeugung der Deflektor-Steuersignale eingefügt ist.

5. System nach einem beliebigen der Ansprüche 2 bis 4, dadurch gekennzeichnet, daß der Steuerkreis (42) ein erstes Signal einer Frequenz (F(t) + ΔF) und ein zweites Signal einer Frequenz (F(t) - ΔF) erzeugt, wobei die Summe dieser Frequenzen 2F(t) die augenblickliche Modulationsfrequenz der Übertragung ist, die unabhängig vom zu erzeugenden Wert der Winkelverschiebung ist, während die Differenz dieser Frequenzen 2ΔF proportional zur zu erzeugenden Winkelverschiebung (Δα) ist.

6. System nach Anspruch 5, dadurch gekennzeichnet, daß die Differenz dieser Frequenzen 2F folgende Beziehung erfüllt:

$$2\Delta F = G.(V/\lambda).\Delta\alpha, \text{ mit } \Delta\alpha = 2w \, D/c,$$

wobei G den Vergrößerungsmaßstab der Optik des Sendepfads darstellt und die Ablenkvorrichtung (41) vor dieser Optik liegt, λ die Laserwellenlänge, V die Schallgeschwindigkeit im akusto-optischen Milieu, D den Zielabstand und c die Lichtgeschwindigkeit bedeutet.

## Claims

1. Laser transceiver system for video pictures including a laser illuminator (1) intended to create a laser beam along a sighting direction, a receiver (2) including a detector (22) for detecting the laser light radiation reflected by the illuminated target according to the corresponding reception direction, a path separation and scanning device (3) intended to direct the reflected radiation to the detector and to displace said beam by an angular rotation in order to scan a predetermined area, optical deviation means (41, 42) intended to produce a relative angular shift between the sighting direction of the illuminator and that of the receiver in order to compensate for the scanning rotation which is taking place while the light beam is conveyed to and fro between the system and the illuminated target, said optical deviation means comprising an optical deflector device (41) controlled by a control circuit (42) in accordance with the variations of the parameters ω and D, ω being the scanning speed and D the target distance, and a display device for displaying the detected video picture corresponding to said area, characterized in that the deflector device (41) is constituted by a parallel arrangement of two acousto-optical deflectors (45, 46), said control circuit (42) producing two signals of distinct frequencies F + ΔF and F - ΔF in order to control respectively said acousto-optical deflectors, F being a constant value and ΔF being predetermined in such a way that said angular shift is obtained having the desired compensafion value (Δα) as well as a modulation, but of constant value 2F in the optical path in which the deflector device is inserted.

2. A system according to claim 1, characterized in that the deflector device (41) is disposed upstream of the separation and scanning device (3) in the case of the optical transmission path and downstream of this device in the case of the optical reception path.

3. A system according to claim 1 or 2, characterized in that said arrangement of acousto-optical deflectors (45, 46) is used in the optical transmission path for constituting both (12, 41) a frequency modulator (12) and said deflector device (41).

4. A system according to claim 2, in which the illuminator (1) comprises a continuous laser generator and modulation means composed of a modulator (12) which is formed by a parallel arrangement of two acousto-optical deflectors (45, 46) and of a generator circuit (13) for generating deflector control signals, characterized in that said modulator further constitutes (1241) said optical deflector device, the control circuit (42) being inserted in that connection with said generator circuit (13).

5. A system according to any one of claims 2 to 4, characterized in that said control circuit (42) produces a first signal having a frequency (F(t) + ΔF) and a second signal having a frequency (F(t) -

ΔF), the sum of these frequencies 2F(t) being the instantaneous modulation frequency of the transmission which is independent of the angular shift value to be produced, whereas the difference of these frequencies 2ΔF is proportional to the angular shift (Δα) to be produced.

6. A system according to claim 5, characterized in that the difference of these frequencies 2F satisfies the following relation:

$$2 \Delta F = G.(V/\lambda).\Delta\alpha, \text{ with } \Delta\alpha = 2w \, D/c,$$

in which G represents the scaling up of the lens in the transmission path, the deflector device (41) being placed upstream of said lens, λ is the laser wavelength, V is the sound velocity in the acousto-optical medium, D is the target distance and c the light velocity.

# FIG_1

# FIG_2

# FIG_3

# FIG_4

1

# FIG_5

## FIG_6

# FIG_7

COMMANDE MODULATION — 13

COMMANDE DEVIATION

F(t)

O.L. — 61

FL

63

64 — 42

65

66

F(t)+FL+ΔF

F(t) + FL

67

68

FL+ΔF

69

V.C.O. — 62

70

F(t) + ΔF

F(t) − ΔF

SC

32

33

31

AS

36

ASSERVIS.^T SITE GISEMENT

52

CALCUL.^R

34

35

AG

D

51

TELEMETRIE

5